# NEUE EUROPÄISCHE PATENTSCHRIFT

(11) **EP 0 151 638 B2**
(45) Veröffentlichungstag und Bekanntmachung des Hinweises auf die Entscheidung über den Einspruch: **20.10.1993**
(45) Hinweis auf die Patenterteilung: 01.02.1989
(21) Anmeldenummer: 84903281.8
(22) Anmeldetag: 16.08.1984
(51) Int. Cl.: G01F 1/84

(54) **MASSEDURCHFLUSSMESSER**
MASS FLOW-METER
DEBITMETRE MASSIQUE

(30) Priorität: 16.08.1983 DE 3329544
(43) Veröffentlichungstag der Anmeldung: 21.08.1985
(73) Patentinhaber: Küppers, Michael, Dipl.-Ing., D-85221 Dachau (DE); Küppers, Günter, Dipl.-Ing., D-85221 Dachau (DE)
(72) Erfinder: Küppers, Karl, (DE)
(74) Vertreter: Hieke, Kurt
(86) Internationale Anmeldenummer: EP8400252
(87) Internationale Veröffentlichungsnummer: WO8500882

(56) Entgegenhaltungen:
- DE-B- 1 114 331
- FR-A- 2 394 065
- US-A- 2 624 198
- US-A- 2 865 201
- US-A- 3 087 325
- US-A- 3 108 475
- US-A- 3 276 257
- US-A- 4 187 721
- US-A- 4 252 028
- US-A- 4 658 657
- "Review of Some Methods of Flow Measurement", Wildhack, W.A., Science, (August 1954), 120, 191-197) (herein the Wildhack review)
- "Mass Flow Measured with Vibration Generators", Bye, W., Fluid Handling, (February 1957), 36-38 (herein the Bye review)
- "Mass Flow Measurement", Siev, R., Instruments & Control Systems, (June 1960), 966-970 (herein the Siev review)

## Beschreibung

Die Erfindung bezieht sich auf einen Massedurchflußmesser gemäß Patentanspruch 1.

Massedurchflußmesser dieser Art sind bekannt und in DE-B- 11 14 331, USA-A- 3,108,475, FR-A-2,394,065 und USA-A- 4,252,028 dargestellt und beschrieben.

Bei den bekannten Massedurchflußmessern gemäß DE-B- 11 14 331 und USA-A- 3,108,475 wird die Rohrschleife motorisch ggf. überein Getriebe, das die Drehbewegung des Motors in die primäre Schwingbewegung der Rohrschleifenhalterung umsetzt, fest gekoppelt mit einer von der Motorfrequenz zwangsweise vorgegebenen Frequenz um die Drehachse in Schwingung versetzt, die hier zu der Schleifenhalterung senkrecht steht.

Bei den bekannten Massedurchflußmessern gemäß FR-A-2394065 und US-A-4252028 hat die Rohrschleife U-Form mit parallelen an einem Ende in eine Schleifenhalterung eingespannten Seitenschenkeln und einem diese an den anderen Enden verbindenden Ouerschenkel, und die Rohr schleife wird von dem Erregersystem so beaufschlagt. daß die primäre Schwingbewegung als Drehschwingung um die Schwingachse stattfindet, die Drehachse und die Schwingachse also zusammenfallen. Die Rohrschleife wird von dem Erregersystem zu dieser primären Schwingung angeregt, so daß sie mit Eigenfrequenz schwingt. Die bei Durchfluß in den Seitenschenkeln der Rohrschleife entstehenden Corioliskräfte führen zu einer um etwa 90° gegen die primäre Erregerschwingung phasenverschobenen, sekundären Drehschwingung des Querschenkels um eine zur Schwing-bzw. Drehachse senkrechte Meßachse. Die Rohrschleife hat um die Meßachse eine erheblich größere Biegesteifigkeit als um die Schwingachse, so daß das Meßsignal sehr klein ist. Das kleine Meßsignal verlangt den bei diesen bekannten Massedurchflußmessern vorgesehenen Einsatz einer Meßeinrichtung, die die gegenseitige Phasenlage der Schwingung mißt, die die Seitenschenkel der Rohrschleife im Abstand von der Schleifenhalterung ausführen.

Der Erfindung liegt die Aufgabe zugrunde, einen Massedurchflußmesser zu schaffen, welcher bei einer Rohrschleife mit Abmessungen gleicher Größenordnung ein gegenüber den bekannten Massedurchflußmessern dieser Gattung wesentlich größeres Meßsignal liefert, so daß wesentlich kleinere Durchflüsse noch sicher erfaßt werden können, oder bei welchem ein vergleichsweise entsprechender Durchflußmeßbereich mit einer Rohrschleife erzielbar ist, die eine wesentlich größere Wandstärke als die Rohrschleife eines bekannten Durchflußmessers für einen solchen Meßbereich aufweist, so daß eine Betrieb bei wesentlich größeren Drücken und damit die Erschließung weiterer Anwendungsgebiete möglich ist.

Die vorgenannte Aufgabe wird durch die Merkmale des Patentanspruchs 1 gelöst.

Bei dem erfindungsgemäßen Massedurchflußmesser wird die Rohrschleife und mit dieser der praktisch immer vorhandene, dem Querschenkel bei den bekannten Durchflußmessern entsprechende Rohrschleifenteil vom Erregersystem zu einer - primären - Drehschwingung um die Drehachse angeregt. Diese primäre Drehschwingung ruft in dem genannten Rohrschleifenteil im Zusammenwirken mit dem Massedurchsatz Corioliskräfte hervor, die eine gegen die Erregerschwingung um 90° verschobene, durchflußproportionale , translatorische Auslenkung dieses Rohrschleifenteils zur Folge haben, die sich der primären Drehschwingung überlagert. Die translatorische Auslenkung äußert sich als Schwingung des vorgenannten Rohrschleifenteils um die Schwingachse der Rohrschleife, und die Biegesteifigkeit der Rohrschleife um die Schwingachse ist wesentlich kleiner als die Biegesteifigkeit, die die Rohrschleife bei den bekannten Durchflußmessern um die Achse der sekundären Schwingung aufweist. Dadurch wird bei dem erfindungsgemäßen Massedurchflußmesser die aufgabengemäß angestrebte Wirkung eines wesentlich größeren Meßsignals bei Abmessungen gleicher Größenordnung bzw. die Einsatzmöglichkeit dickerer Rohre oder dgl. bei gleichem Meßbereich erreicht.

Die Unteransprüche betreffen bevorzugte Ausführungen des Gegenstandes des Hauptanspruchs.

Die Erfindung wird nachstehend an Ausführungsbeispielen anhand der Zeichnung noch näher erläutert. In der Zeichnung zeigt:
Fig. 1 einen erfindungsgemäßen Massedurchflußmesser in vereinfachter Darstellung in perspektivischer Ansicht zur Erläuterung des Grundprinzips,
Fig. 2 den zeitlichen Verlauf und die gegenseitige Phasenlage der Schwingungen, die die Seitenschenkel bzw. der Querschenkel der Rohrschleife beim Durchflußmesser gemäß Fig. 1 ausführen,
Fig. 3 eine erste praktische Ausführung des erfindungsgemäßen Massedurchflußmessers in schematischer Darstellung in perspektivischer Ansicht und
Fig. 4 eine zweite praktische Ausführung in schematischer Darstellung und in perspektivischer Ansicht.

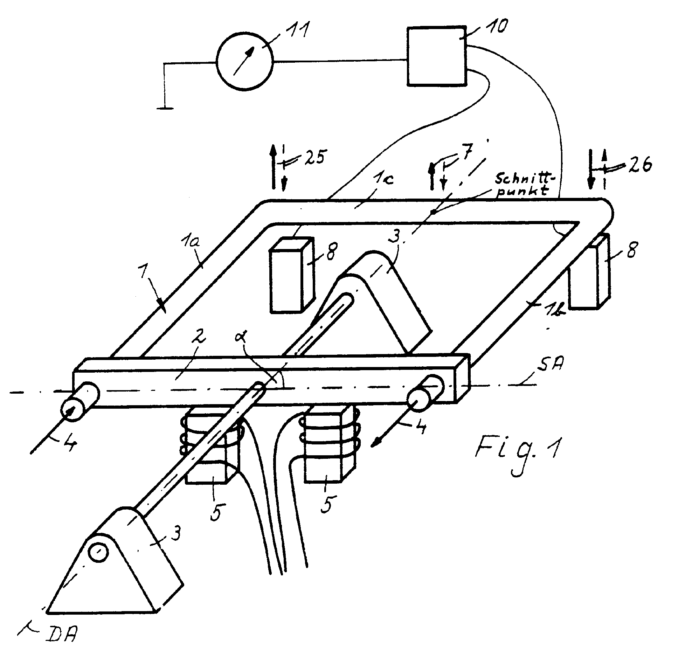

Der erfindungsgemäße Durchflußmesser gemäß Fig. 1 weist eine Rohrschleife 1 auf, die einseitig in eine in sich starre Schleifenhalterung 2 eingespannt ist, der gegenüber sie quer zu ihrer Ebene um eine durch die Einspannung definierte Schwingachse SA elastisch auslenkbar ist. Die Rohrschleife 1 bildet eine halbe Windung und besteht aus zwei sich im gegenseitigen Abstand von der Schleifenhalterung 2 aus erstreckenden Seitenschenkeln 1 a, 1 b und einem diese im Abstand von der Halterung 2 verbindenden Querschenkel lc.

Die Schleifenhalterung 2 ist in einer Lagerung 3 um eine Drehachse DA drehbar gelagert, die wie die Schwingachse SA in der Ebene der Rohrschleife liegt. Die Drehachse DA erstreckt sich parallel zu den Seitenschenkeln 1a, 1b der Rohrschleife 1, schließt mit der Schwingachse SA einen Winkel von etwa 90° ein und schneidet den Querschenkel 1 der Rohrschleife 1 im wesentlichen in der Mitte.

Der Rohrschleife 1 wird das Meßmedium, gewöhnlich eine Flüssigkeit, an dem einen eingespannten Ende zugeführt, und es tritt aus dieser an dem anderen eingespannten Ende aus, wie dies in Fig. 1 durch die Pfeile 4 angedeutet ist. Dabei durchströmt es der Reihe nach den Seitenschenkel 1a, den Querschenkel 1c und den Seitenschenkel 1 b.

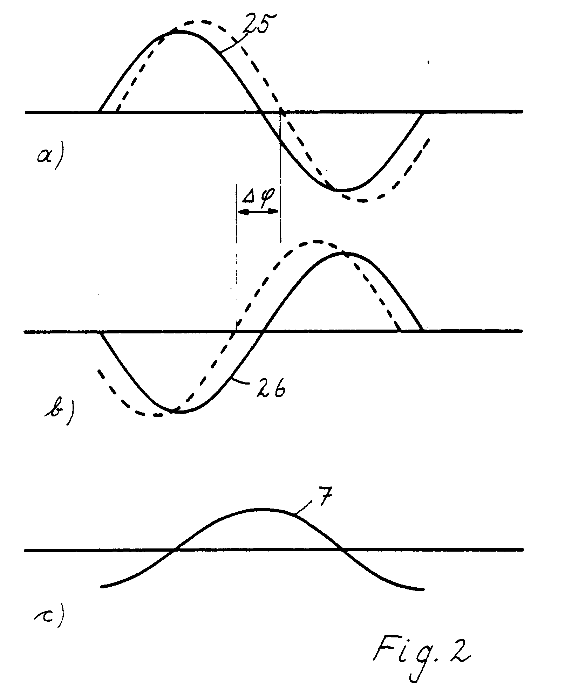

Unmittelbar neben der hier aus magnetischem Material bestehenden Schleifenhalterung 2 ist ein elektromagnetisches Erregersystem 5 angeordnet, das die Schleifenhalterung 2 und über diese die Rohrschleife 1 um die Drehachse DA in eine primäre Drehschwingung versetzt. Solange sich das Meßmedium in der Rohrschleife 1 im Stillstand befindet, d. h. der Durchfluß den Wert Null hat, führen die Seitenschenkel 1a, 1b an den dem Querschenkel 1c benachbarten Enden die in Fig. 2 bei a) und b) mit einem ausgezogenen Linienzug dargestellten, im wesentlichen sinusförmigen Schwingungen aus, die in Bezug aufeinander um 180° versetzt, also gegenphasig sind. In Fig. 1 sind diese Schwingungen mit den Pfeilen 25 bzw. 26 angedeutet, wobei die ausgezogenen Pfeile einerseits und die gestrichelten Pfeile andererseits zeitlich zusammengehörende Paare bilden.

Wenn Meßmedium durch die Rohrschleife 1 fließt, bewegt es sich im Querschenkel 1c zunächst zur Drehachse DA hin und dann von dieser wieder weg. Dadurch entstehen unterdem Einfluß der um die Drehachse DA stattfindenden Drehschwingung in dem Querschenkel 1c Corioliskräfte, deren Größe dem jeweiligen Durchfluß proportional ist und die den Schenkel 1c um die Schwingachse SA auszulenken trachten, wobei die Richtung der Auslenkung periodisch mit der Drehschwingung der Rohrschleife 1 um die Drehachse DA wechselt. Diese translatorische Auslenkung des Querschenkels 1c, die sich an der Rohrschleife 1 als Drehschwingung um die Schwingachse SA von durchflußproportionaler Amplitude äußert, ist gegen die primäre Drehschwingung der Rohrschleife 1 um die Drehachse DA, die das Erregersystem 5 verursacht, um 90° versetzt, wie dies bei c) in Fig. 2 dargestellt ist. In Fig. 1 ist dieses Schwingung mit den Pfeilen 7 angedeutet.

Die durchflußproportionale Schwingung aus der Corioliskraft überlagert sich den in Fig. 2a und Fig. 2b ausgezogen dargestellten Grundschwingungen in der jeweils in diesen Figuren mit einem gestrichelten Linienzug dargestellten Weise und führt zu einer Phasenverschiebung A <p zwischen den resultieren Schwingungen, die die Seitenschenkel 1a und 1 b an den dem Querschenkel benachbarten Enden durchführen, wobei der Phasenversatz zu der Corioliskraft und damit zum Durchfluß genau proportional ist.

Die Rohrschleife 1 hat um die Schwingachse SA, um die die Corioliskräfte im Ouerschenkel 1c der Rohrschleife 1 die sekundäre Schwingung herbeiführen, prinzipiell eine - natürlich von der Beschaffenheit des Rohers abhängige - geringe Biegesteifigkeit, so daß auch dicke Rohre bei relativ geringen Durchflüssen noch eine eindeutige meßbare Meßauslenkung gemäß Pfeil 7 liefern bzw. bei entsprechenden dünneren Rohren noch äußerst kleine Durchflüsse mit einer eindeutig meßbaren Meßauslenkung angezeigt werden.

Die Meßauslenkung der Rohrschleife 1 stellt eine Meßeinrichtung 8 fest, die die Phasenverschiebung A <p zwischen den Schwingungen, die die dem Querschenkel 1 c benachbarten Enden der Seitenschenkel 1 a, 1 b der Rohrschleife 1 durchführen, mißt. Aus dem Phasenversatz der Auslenkung wird mittels einer elektronischen Einrichtung 10 ein durchflußproportionales Signal hergestellt und an einem Anzeigeinstrument" zur Anzeige gebracht.

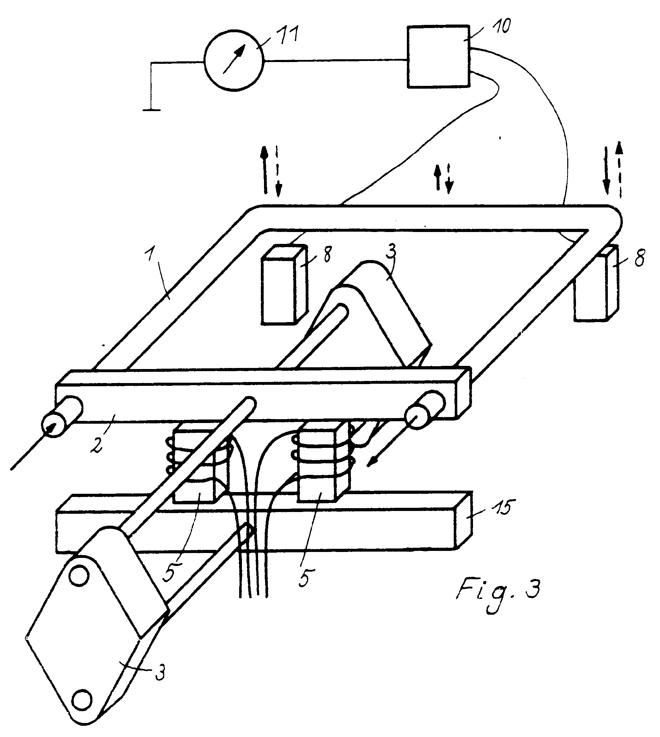

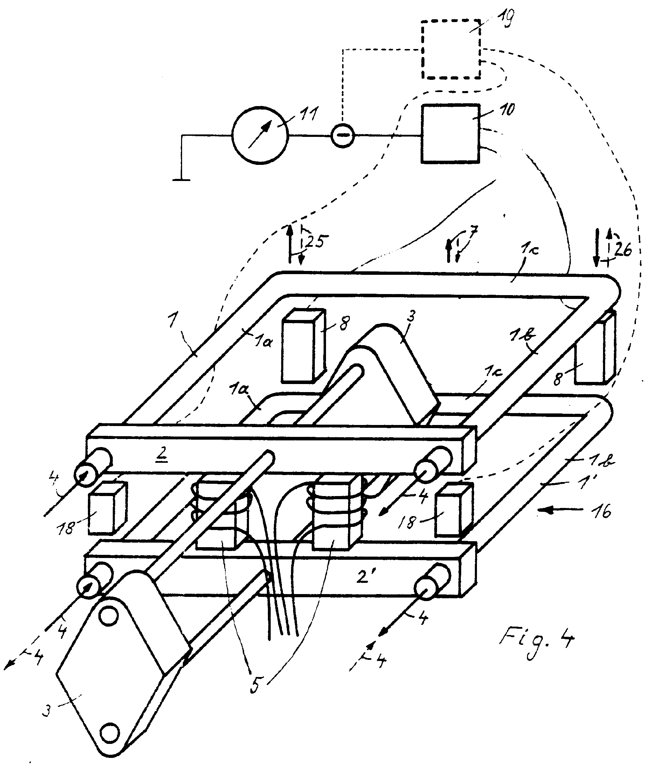

Ohne eine besondere zusätzliche Einrichtung würde ein Durchflußmesser, der gemäß Fig. 1 aufgebaut ist, erhebliche Massenkräfte auf das Gehäuse ausüben, in dem die einzelnen Teile des Durchflußmessers angeordnet und gehalten sind. Die Fig. 3 und 4 zeigen Ausführungen des prinzipiell gemäß Fig. 1 aufgebauten Durchflußmessers jeweils mit einer Einrichtung, die dies verhindert.

Bei beiden Ausführungen gemäß Fig. 3 einerseits und Fig. 4 andererseits ist ein Massenausgleich vorgesehen, u. zw. werden die durch die Schwingbewegung der Schleifenhalterung 2 und der Rohrschleife 1 bedingten, auf die Lagerung 3 der Schleifenhalterung 2 wirkenden Massenkräfte durch ein eine Gegenwirkung auf diese Lagerung 3 ausübendes, gegenphasig mit gleicher Frequenz schwingendes Massenausgleichssystem 15 bzw. 16 kompensiert. Bei der Ausführung nach Fig. 3 ist dieses Massenausgleichssystem ein wie die Halterung 2 an deren Lagerung 3 drehbar gelagerter, vom Erregersystem 5 in zu dieser gegenphasige Schwingung versetzter Balken 15 mit einem Schwungmoment um seine zu der Drehachse DA parallele Drehachse, das das Schwungmoment des schwingenden Durchflußmeß-Teiles kompensiert, und bei der Ausführung nach Fig. 4 besteht diese Einrichtung aus einer identischen Wiederholung der Rohrschleife 1 mit zugehöriger Schleifenhalterung 2. Die wiederholte Rohrschleife 1' mit zugehöriger Halterung 2' schwingt auch bei der Ausführung nach Fig. 4 gegenphasig zur Rohrschleife 1 und deren Halterung 2.

Die Ausführung nach Fig. 4 bietet aufgrund der bei ihr vorhandenen zwei Rohrschleifen 1,1', die untereinander identisch sind, die Möglichkeit, bei entsprechender Gestaltung der Meßeinrichtung 8 bzw. 9 auch die Summe oder die Differenz der Einzeldurchsätze durch die Rohrschleife 1 einerseits und durch die Rohrschleife 1' andererseits zu messen. So kann z. B. dadurch, daß ein bestimmtes Meßmedium in Serie durch die Rohrschleifen 1 und 1' geschickt wird, bei Summenmessung das Meßsignal verdoppelt werden. Ein Beispiel für eine Differenzmessung ist die Zuführung von Kraftstoff zu einem Motor durch die eine Rohrschleife und das Ableiten von überschüssigem, im Motor nicht verbrauchtem Kraftstoff durch die andere Rohrschleife, wobei als Resultat der Differenz-Messung der im Motor verbrauchte Kraftstoff angezeigt wird.

Bei allen vorstehend erläuterten Ausführungsformen können die Lagerung 3, das Erregersystem 5 und die Meßeinrichtung 8 starr mit dem Gehäuse des Durchflußmessers verbunden und damit auch untereinander starr gekoppelt sein.

Die Lagerung 3 für die Schleifenhalterung kann bei den beschriebenen Ausführungsformen aber auch gegenüber dem Gehäuse des Durchflußmessers abgefedert sein. Die Abfederung hat die Wirkung, daß von aussen kommende Erschütterungen des Gehäuses oder anderweitige äußere Einflüsse auf das Gehäuse von dem Meßsystem ferngehalten werden. Im letzteren Falle empfiehlt es sich, das Erregersystem 5 und die Meßeinrichtung 8 nicht starr mit dem Gehäuse sondern starr mit der Lagerung 3 für die Schleifenhalterung 2 bzw. die Schleifenhalterungen 2, 2' zu koppeln.

Die Fig. 4 zeigt noch eine zweite Meßeinrichtung 18. die ähnlich wie die Meßeinrichtung 8 funktioniert aber anders als die letztere die Bewegung der Schleifenhalterung 2 und/oder 2' gegenüber dem Gehäuse des Massedurchflußmessers mißt und deren Signal zur Kompensation eines eventuellen Nullpunktfehlers durch äußere Einflüsse herangezogen werden kann. Das kompensierende Signal wird bei der Ausführung nach Fig. 4 in einer elektronischen Einrichtung 19 erzeugt und dem Signal aus der elektronischen Einrichtung 10 kompensierend überlagert. Auf diese Weise sind Störungen des Meßsystems vom Gehäuse des Durchflußmessers her praktisch vollständig eleminierbar.

Die Meßeinrichtung 18 ist vorzugsweise starr mit dem Gehäuse des Durchflußmessers verbunden.

Die vorstehende Beschreibung und die beigefügte Zeichnung geben die derzeit bekannten besten Wege Ausführung der Erfindung wieder.

## Patentansprüche

1. Massedurchflußmesser mit mindestens einer vom Meßmedium durchströmten Rohrschleife (1, 1'), die einseitig in eine in sich starre in einer Lagerung (3) gelagerte Schleifenhalterung (2) eingespannt ist, eine halbe Windung bildet, aus zwei sich im gegenseitigen Abstand von der Schleifenhalterung aus erstreckenden seitlichen Schenkeln (1a, 1 b), sowie einem diese im Abstand von der Halterung verbindenden Querschenkel (1c) besteht, wobei die seitlichen Schenkel an dem dem Querschenkel entgegengesetzten Ende in die Halterung (2) eingespannt sind, und gegenüber der Schleifenhalterung quer zu ihrer Ebene um eine durch die Einspannung definierte Schwingachse (SA) biegen elastisch auslenkbar ist,
ferner mit einem Erregersystem (5); das die Schleifenhalterung sind über diese die Rohrschleife im Betrieb zu einer primären Schwingbewegung um eine vorgegebene Drehachse (DA) der Lagerung anregt, die die Schwingachse (SA) unter einem von 0° wesentlich verschiedenen Winkel kreuzt und in minimalen Abstand an dem Querschenkel vorbeiführt oder diesen schneidet, welche Schwingbewegung im Zusammenwirken mit dem Massedurchfluß durch die Schleife in dieser Corioliskräfte hervorruft, die durchflußproportional auf die Schleife einwirken und diese zu einer Schwingbewegung um die Schwingachse (SA) veranlassen und
mit einer Meßeinrichtung (8, 9), die die gegenseitige Phasenlage der Schwingung mißt, die die Seitenschenkel (1a, 1b) der Rohrschleife (1, 1') im Abstand von der Schleifenhalterung (2) ausführen.

2. Massedurchflußmesser nach Anspruch 1, dadurch gekennzeichnet, daß die Seitenschenkel (1a, 1b) der Rohrschleife (1, 1') zueinander parallel verlaufen und der Querschenkel (1 c) sich zu ihnen senkrecht erstreckt.

3. Massedurchflußmesser nach Anspruch 1, dadurch gekennzeichnet, daß die Meßeinrichtung (8) die Schwingung in der Nähe des Querschenkels mißt.

4. Massedurchflußmesser nach einem der vorhergehenden Ansprüche, dadurch gekennzeichnet, daß das Erregersystem (5) als elektromagnetisches System ausgeführt ist.

5. Massedurchflußmesser nach einem der vorhergehenden Ansprüche, dadurch gekennzeichnet. daß die Drehachse (DA) die Schwingachse (SA) unter einem Winkel (a) von etwa 90° kreuzt.

6. Massedurchflußmesser nach einem der vorhergehenden Ansprüche, dadurch gekennzeichnet. daß die Drehachse (DA) den Querschenkel (1c) in der Mitte kreuzt.

7. Massedurchflußmesser nach einem der vorhergehenden Ansprüche, dadurch gekennzeichnet, daß die durch die Schwingbewegung der Schleifenhalterung (2) und der Rohrschleife (1) bedingten, auf die Lagerung (3) der Schleifenhalterung (2) wirkenden Massenkräfte durch ein eine Gegenwirkung auf diese Lagerung (3) ausübendes, gegenphasig mit gleicher Frequenz schwingendes Massenausgleichssystem (15, 16) kompensiert sind.

8. Massedurchflußmesser nach Anspruch 6, dadurch gekennzeichnet, daß das Massenausgleichssystem (16) aus einer identischen Wiederholung der Rohrschleife (1) mit zugehöriger Schleifenhalterung (2) besteht.

9. Massedurchflußmesser nach Anspruch 7 oder 8, dadurch gekennzeichnet, daß die Lagerung (3) der Schleifenhalterung (2, 2') gegenüber dem Gehäuse des Durchflußmessers abgefedert ist.

10. Massedurchflußmesser nach einem der Ansprüche 7 bis 9, dadurch gekennzeichnet, daß die Meßeinrichtung (8, 9) bezüglich der Lagerung (3) der Schleifenhalterung (2, 2') ortsfest zugeordnet ist.

11. Massedurchflußmesser nach einem der vorhergehenden Ansprüche, dadurch gekennzeichnet, daß eine zweite Meßeinrichtung (18) vorgesehen ist, die die Bewegung der Schleifenhalterung (2, 2') gegenüber deren Lagerung (3) oder gegenüber dem Gehäuse des Massedurchflußmessers mißt und deren Signal zur Kompensation eines evtl. Nullpunktfehlers durch äußere Einflüsse herangezogen wird.

## Claims

1. Mass throughflow meter with at least one pipe loop (1, 1 which is flowed through by the measurement medium, is clamped at one side into an in itself rigid loop mount (2) mounted in a bearing (3), forms half a turn, consists of two lateral limbs (1a, 1b) extending at a mutual spacing out from the loop mount as well as of a transverse limb (1c) connecting these at a spacing from the mount, wherein the lateral limbs are clamped in the mount (2) at the ends opposite the transverse limb, and is bending-elastically deflectable relative to the loop mount transversely to its plane about an oscillation axis (SA) defined by the clamping, furthermore with an excitation system (5) which in operation excites the loop mount and by way of this the pipe loop into a primary oscillatory movement about a given rotational axis (DA) of the mount, which rotational axis crosses the oscillation axis (SA) at an angle substantially different from 0° and leads past the transverse limb at a minimum spacing or intersects this, which oscillatory movement in co-operation with the mass throughflow through the loop generates coriolis forces therein, which act on the loop proportionally to the throughflow and induce this into an oscillatory movement about the oscillation axis (SA), and with a measuring equipment (8, 9), which measures the mutual phase position of the oscillation which the side limbs (1a, 1b) of the pipe loop (1, 1') perform at the spacing from the loop mount (2).

2. Mass throughflow meter according to claim 1, characterised thereby, that the side limbs (1a, 1 b) of the pipe loop (1, 1') each extend parallelly to the other and the transverse limb (1c) extends perpendicularly to them.

3. Mass throughflow meter according to claim 1, characterised thereby, that the measuring equipment (8) measures the oscillation in the proximity of the transverse limb.

4. Mass throughflow meter according to one of the preceding claims characterised thereby, that the excitation system (5) is constructed as electromagnetic system.

5. Mass throughflow meter according to one of the preceding claims, characterised thereby, that the rotational axis (DA) crosses the osscillation axis (SA) at an angle (a) of about 90°.

6. Mass throughflow meter according to one of the preceding claims, characterised thereby, that the rotational axis (DA) crosses the transverse limb (1c) in the middle.

7. Mass throughflow meter according to one of the preceding claims, characterised thereby, that the mass forces, which are caused by the oscillatory movement of the loop mount (2) and of the pipe loop (1) and act on the bearing (3) of the loop mount (2), are compensated for by a mass-balancing system (15, 16) oscillating in opposite phase at equal frequency and exerting a counter- effect on this bearing (3).

8. Mass throughflow meter according to claim 6, characterised thereby, that the mass-balancing system (16) consists of an identical repetition of the pipe loop (1) with associated loop mount (2).

9. Mass throughflow meter according to claim 7 or 8, characterised thereby, that the bearing (3) of the loop mount (2, 2') is sprung relative to the housing of the throughflow meter.

10. Mass throughflow meter according to one of the claims 7 to 9, characterised thereby, that the measuring equipment (8, 9) is associated in fixed location with reference to the bearing (3) of the loop mount (2, 2').

11. Mass throughflow meter according to one of the preceding claims characterised thereby, that a second measuring equipment (18) is provided, which measures the movement of the loop mount (2, 2') relative to its bearing (3) or relative to the housing of the mass throughflow meter and the signal of which is drawn upon for the compensation of a possible zero point error due to external influences.

## Revendications

1. Débitmètre massique, comprenant au moins une boucle de tuyau (1, 1 parcourue par le milieu de mesure, qui est encastrée d'un côté dans une fixation de boucle (2) rigide en soi, montée dans un support de pivotement (3), forme une demi- spire, comprend deux branches latérales (1a, 1 b) s'étendant à distance de part et d'autre de la fixation de boucle, ainsi qu'une branche transversale (1c) y reliée, à distance de la fixation, tandis que les branches latérales sont encastrées dans le fixation 2 aux extrémités opposées à la branche transversale, et peuvent se déformer par flexion élastique vis-à-vis de la fixation de boucle, perpendiculairement par rapport à son plan et autour d'un axe de pivotement (SA) défini par l'encastrement,
comprenant en outre un système excitateur (5) qui, en fonctionnement, imprime à la fixation de boucle, et par celle-ci à la boucle de tuyau, un mouvement d'oscillation primaire autour d'un axe de rotation (DA) donné du support de pivotement, qui croise l'axe d'oscillation (SA) sous un angle essentiellement différent de 0° et passe à une distance minimale par la branche transversale, ou la coupe, le dit mouvement d'oscillation suscitant, conjointement avec le débit massique dans la boucle, des forces de Coriolis qui agissent sur la boucle proportionnellement au débit, et lui impriment un mouvement de pivotement autour de l'axe de pivotement (SA), et
avec un dispositif de mesure (8, 9) qui mesure le déphasage relatif de l'oscillation qu'effectuent les branches latérales (1a, 1 b) de la boucle de tuyau (1, 1') à distance de la fixation de boucle (2).

2. Débitmètre massique selon la revendication 1, caractérisé en ce que les branches latérales (1a, 1 b) de la boucle de tuyau (1, 1') sont parallèles entre elles et en ce que la branche transversale (1c) leur est perpendiculaire.

3. Débitmètre massique selon la revendication 1, caractérisé en ce que le dispositif de mesure (8) mesure l'oscillation au voisinage de la branche transversale.

4. Débitmètre massique selon l'une des revendications qui précèdent, caractérisé en ce que le système excitateur (5) est réalisé sous la forme d'un système électromagnétique.

5. Débitmètre massique selon l'une des revendications qui précèdent, caractérisé en ce que l'axe de rotation (DA) coupe l'axe d'oscillation (SA) sous un angle (a) d'environ 90°.

6. Débitmètre massique selon l'une des revendications qui précèdent, caractérisé en ce que l'axe de rotation (DA) croise la branche transversale (1c) en son milieu.

7. Débitmètre massique selon l'une des revendications qui précèdent, caractérisé en ce que les forces dues à la masse, résultant du mouvement d'oscillation de la fixation de boucle (2) et de la boucle de tuyau (1) et agissant sur le support de pivotement (3) de la fixation de boucle (2), sont compensées par un système d'équilibrage des masses (15,16) oscillant en opposition de phase, à la même fréquence, exerçant un effet antagoniste sur le dit support de pivotement (3).

8. Débitmètre massique selon la revendication 6, caractérisé en ce que le système d'équilibrage des masses (16) consiste en une répétition identique de la boucle de tuyau (1) avec fixation de boucle correspondante (2).

9. Débitmètre massique selon la revendication 7 ou 8, caractérisé en ce que le support de pivotement (3) de la fixation de boucle (2, 2') est monté à ressort par rapport au châssis du débitmètre.

10. Débitmètre massique selon l'une des revendications 7 à 9, caractérisé en ce que le dispositif de mesure (8, 9) est fixe par rapport au support de pivotement (3) de la fixation de boucle (2, 2').

11. Débitmètre massique selon l'une des revendications qui précèdent, caractérisé en ce qu'il comprend un deuxième dispositif de mesure (18) qui mesure le mouvement de la fixation de boucle (2,2') par rapport à son support de pivotement (3) ou par rapport au logement du débitmètre massique, son signal étant introduit pour la compensation d'une erreur de zéro éventuelle due à des influences extérieures.
